# EUROPEAN PATENT APPLICATION

(11) **EP 4 803 339 A1**
(43) Date of publication of application: **09.09.2026**
(21) Application number: 25187172.9
(22) Date of filing: 03.07.2025
(51) Int. Cl.: B60K 11/08

(54) **ACTIVE AIR FLAP APPARATUS FOR VEHICLE**

(30) Priority: 05.03.2025 KR 20250028289
(71) Applicant: Hyundai Mobis Co., Ltd., Gangnam-gu Seoul 06141 (KR)
(72) Inventor: KIM, Jang Ho, 16891 Yongin-si, Gyeonggi-do (KR); JO, Jun Seong, 31816 Dangjin-si, Chungcheongnam-do (KR)
(74) Representative: Jung, Minkyu

(57) **Abstract**

An active air flap apparatus for a vehicle includes a housing part including a first housing having a first air passage and a second housing having a second air passage, a flap part including a first flap rotatably connected to the first housing through a first shaft and selectively opens and closes the first air passage and a second flap which is rotatably connected to the second housing through a second shaft and selectively opens and closes the second air passage, a linear actuator including a sliding rod which linearly moves in a front-rear direction of the vehicle which is different from an extension direction of the first shaft and the second shaft and generates a driving force for rotating the first flap and the second flap, and a link part to transmit the driving force to the flap part to rotate the first flap and the second flap.

## Description

### CROSS REFERENCE TO RELATED APPLICATION

This application claims priority to and the benefit of Korean Patent Application No. 10-2025-0028289, filed on March 05, 2025, in the Korean Intellectual Property Office, the entire disclosure of which is incorporated herein by reference in its entirety for all purposes.

### BACKGROUND

### 1. Field of the Invention

The present invention relates to an active air flap apparatus for a vehicle.

### 2. Description of Related Art

An active air flap (AAF) apparatus is installed inside (or attached to) a grill in the front of a vehicle and opens or closes an outside air inlet of the grill according to a state of the vehicle. Specifically, the AAF closes a flap to close the outside air inlet in order to obtain effects of air resistance reduction and fuel efficiency improvement when the vehicle travels at high speed and opens the flap to open the outside air inlet in order to decease a temperature in an overheated engine room when the vehicle travels at low speed.

In general, the AAF apparatus is applied to each of left and right sides of the vehicle in a width direction and configured to drive each of the flaps at the left and right sides, and accordingly, an actuator is individually provided to the AAF at each of both the left and right sides.

In the case of the AAF apparatus, the cost of the actuator accounts for the largest portion, and since a high-torque actuator of about 60 kgf·cm or more is required for smooth rotational driving of the flap, there is a problem that such a high-torque actuator is expensive and increases the overall cost. Therefore, there is a need to resolve this problem.

### SUMMARY

The Summary is provided to introduce an active air flap apparatus for a vehicle in which a linear actuator, which is relatively cheaper than a high-torque actuator, is used so as to reduce the cost of the active air flap apparatus and also generate an increased torque compared to the conventional case.

Technical problems of the present invention are not limited to the aforementioned technical problems, and other technical problems, which are not mentioned above, may be clearly understood by those skilled in the art from the following descriptions.

One aspect of the present invention provides an active air flap apparatus for a vehicle, which includes a housing part including a first housing having a first air passage and a second housing having a second air passage, a flap part including a first flap which is rotatably connected to the first housing through a first shaft and selectively opens and closes the first air passage and a second flap which is rotatably connected to the second housing through a second shaft and selectively opens and closes the second air passage, a linear actuator including a sliding rod which linearly moves in a front-rear direction of the vehicle which is different from an extension direction of the first shaft and the second shaft and generates a driving force for rotating the first flap and the second flap, and a link part configured to transmit the driving force to the flap part to rotate the first flap and the second flap.

The first shaft may include a first connecting rod connected to the link part and the second shaft may include a second connecting rod connected to the link part, respectively, and the first connecting rod and the second connecting rod may be disposed in directions perpendicular to the extension direction of the first shaft and the second shaft, respectively.

The first connecting rod and the second connecting rod may be configured to convert linear motion of the sliding rod to rotational motion about the first shaft and the second shaft in conjunction with the link part.

The link part may rotatably installed in the housing part, the driving link includes a pair of side rods disposed on a first end and a second end thereof in a longitudinal direction and a center rod provided between the pair of side rods, a connecting link having a first end rotatably connected to the center rod and a second end connected to the sliding rod, a first side link having a first end rotatably connected to the side rod at a first side and a second end rotatably connected to the first connecting rod, and a second side link having a first end rotatably connected to the side rod at a second side and a second end rotatably connected to the second connecting rod.

The driving link may be disposed between the first shaft and the second shaft in a direction perpendicular to the sliding rod, and the pair of side rods and the center rod may be disposed in a structure extending in a direction different from the longitudinal direction of the driving link.

The first side link may include a first connecting hole coupled to a connecting protrusion of the first connecting rod, a wedge-shaped support protrusion having a chamfered surface may be disposed in the first connecting hole, and the first connecting hole may have a diameter that decreases from both side surfaces of the first side link toward a center of the first side link.

The second side link may include a second connecting hole coupled to a connecting protrusion of the second connecting rod, a wedge-shaped support protrusion having a chamfered surface may be disposed in the second connecting hole, and the second connecting hole may have a diameter that decreases from both side surfaces of the second side link toward a center of the second side link.

An end portion of the center rod connected to the connecting link may be configured to move in an arc-shaped trajectory between a first point, which is at a front side based on a vertical line passing through the driving link, and a second point which is at a rear side based thereon.

The driving link may be disposed on and supported by a support provided in the housing part, and a cover which covers the driving link may be coupled onto the support.

The housing part may further include a connecting bracket disposed between and connected to the first housing and the second housing, and the linear actuator and the link part may be installed on the connecting bracket.

### BRIEF DESCRIPTION OF THE DRAWINGS

FIG. 1 is a view illustrating an active air flap apparatus according to an embodiment of the present invention;
FIG. 2 is a view illustrating a configuration of the active air flap apparatus;
FIG. 3 is a view illustrating a first flap and a second flap in the active air flap apparatus;
FIG. 4 is a view illustrating a link part in the active air flap apparatus;
FIG. 5 is a view illustrating a trajectory along which a center rod rotates according to the operation of a linear actuator;
FIG. 6 is a view illustrating a state in which a connecting protrusion of a connecting rod is connected to a connecting hole of a side link;
FIG. 7 is a cross-sectional view along line I-I' in FIG. 6;
FIG. 8 is a view illustrating a connecting structure of a flap part and the link part; and
FIG. 9 is a view illustrating an operation process of the flap part.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

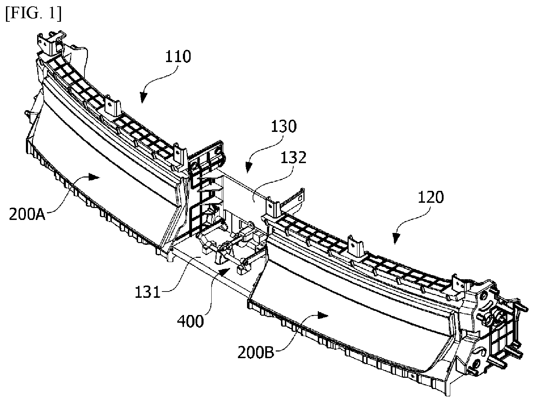

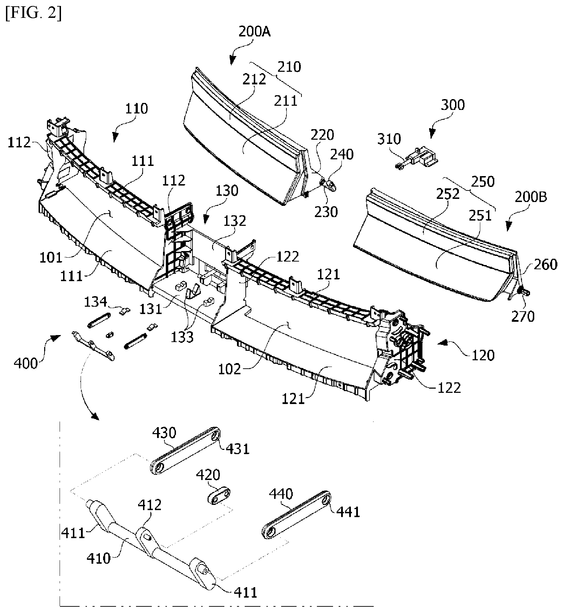

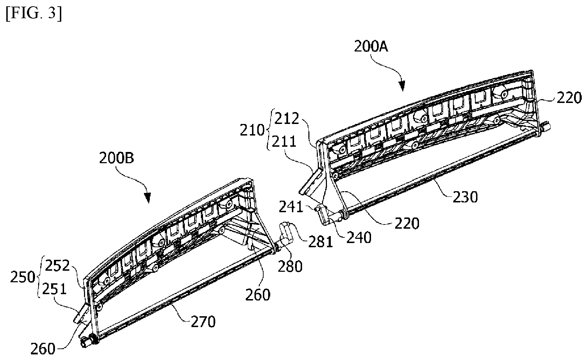

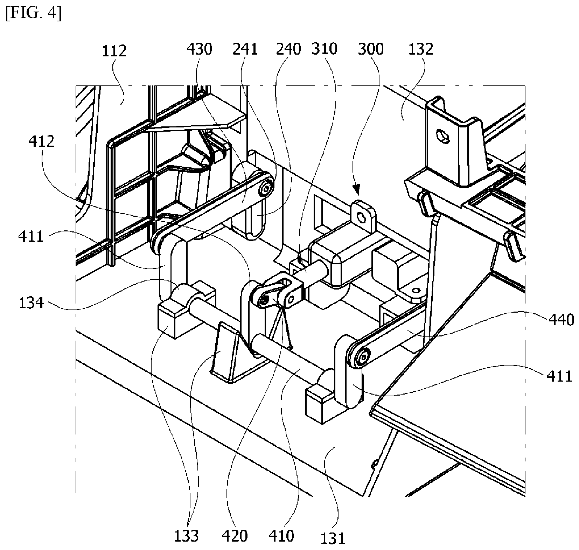

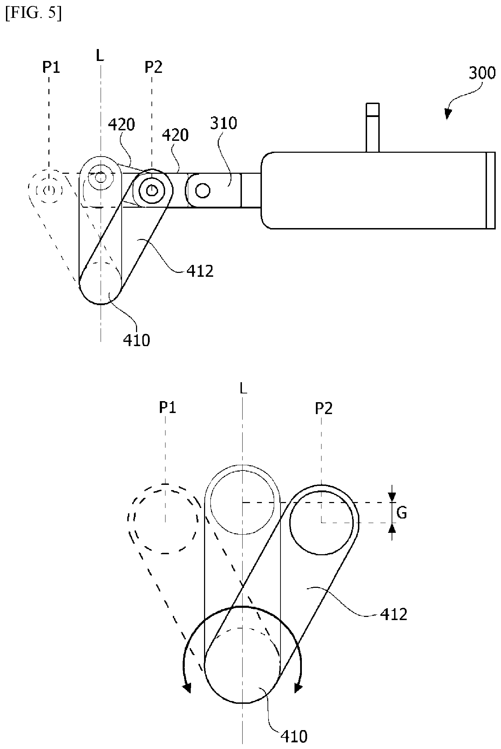

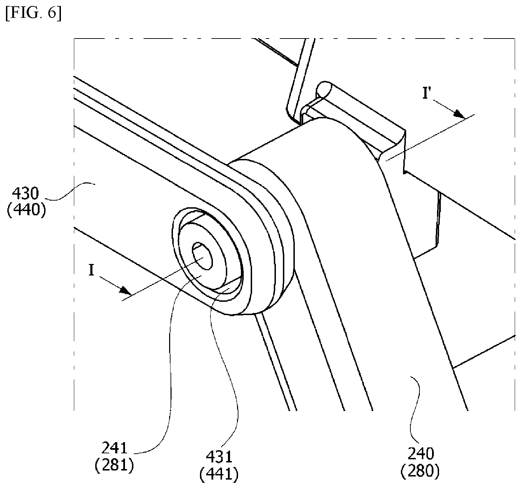

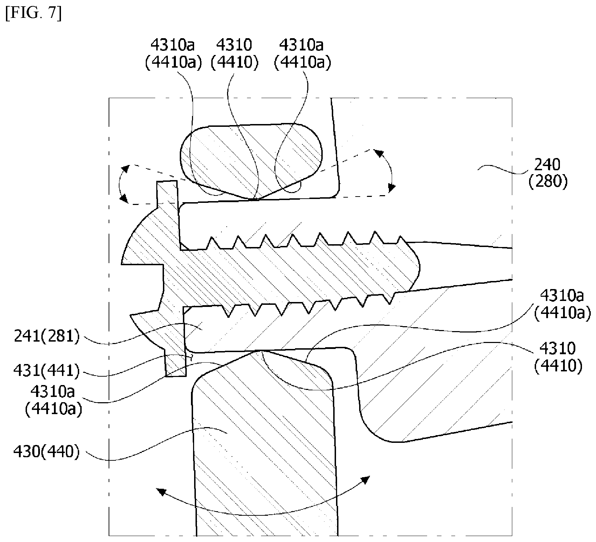

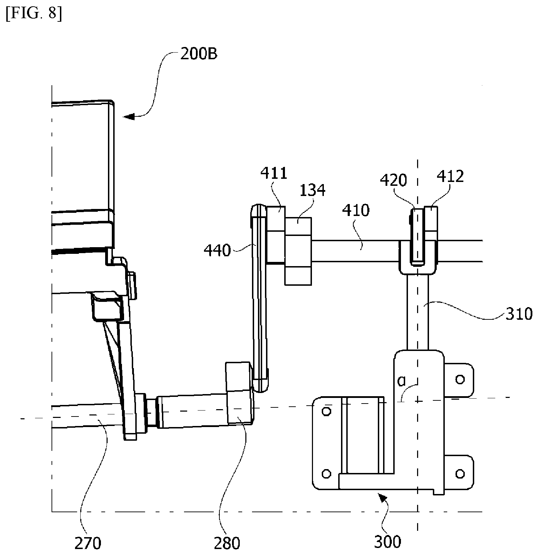

FIGS. 1 to 9 are views illustrating an active air flap apparatus for a vehicle, and a configuration and operation process thereof according to an embodiment of the present invention.

Referring to the drawings, the active air flap apparatus for a vehicle according to the embodiment of the present invention may include a housing part 100, a flap part 200, a linear actuator 300, and a link part 400.

The housing part 100 includes a first housing 110 and a second housing 120, and the first housing 110 and the second housing 120 may be disposed in a structure extending in a width direction of a vehicle. The housing part 100 may be assembled to an unillustrated bumper cover or bumper grill of the vehicle.

The first housing 110 may have a first air passage 101 through which air passes, and the second housing 120 may have a second air passage 102 through which air passes.

The first housing 110 may include first horizontal frames 111, which are vertically disposed, and a pair of first vertical frames 112 which connect both end portions of the first horizontal frames 111. The first air passage 101 surrounded by the first horizontal frames 111 and the first vertical frames 112 may have a substantially rectangular shape.

The second housing 120 may include second horizontal frames 121, which are vertically disposed, and a pair of second vertical frames 122 which connect both end portions of the second horizontal frames 121. The second air passage 102 surrounded by the second horizontal frames 121 and the second vertical frames 122 may have a substantially rectangular shape.

In the embodiment, the housing part 100 may further include a connecting bracket 130 which is disposed between and connected to the first housing 110 and the second housing 120 which are disposed to be spaced apart from each other.

The connecting bracket 130 may be disposed between the first housing 110 and the second housing 120 and connect a first vertical frame 112 and a second vertical frame 122 which face each other. The connecting bracket 130 may be integrally formed with the first housing 110 and the second housing 120.

The connecting bracket 130 may have a bent structure having substantially an "L" shape including a horizontal part 131 and a vertical part 132. The linear actuator 300 and the link part 400 may be installed on the connecting bracket 130.

The flap part 200 may include a first flap 200A and a second flap 200B.

The first flap 200A may be configured to selectively open or close the first air passage 101 in the first housing 110, and the second flap 200B may be configured to selectively open or close the second air passage 102 in the second housing 120. The first flap 200A and the second flap 200B may have structures that are symmetrical to each other.

The first flap 200A may be rotatably connected to the first housing 110 through a first shaft 230. The first flap 200A may include a first main panel 210 and a pair of first side panels 220 extending rearward from both sides of the first main panel 210.

The first main panel 210 may include a first lower part 211 disposed to face forward from the first air passage 101 and obliquely extending upward from a first horizontal frame 111 at a lower side and a first upper part 212 extending substantially vertically from the first lower part 211 toward the first horizontal frame 111 at an upper side.

The first shaft 230 may be provided in the pair of first side panels 220, and the first flap 200A may be rotatably connected to the first housing 110 through the first shaft 230.

The first shaft 230 may be provided as a structure passing through the pair of first side panels 220, and both end portions of the first shaft 230 may extend outward from the pair of first side panels 220 and may be connected to the first housing 110.

A first connecting rod 240 connected to the link part 400 may be provided on the first shaft 230. The first connecting rod 240 may extend at an outer side surface of one of the pair of first side panels 220 in a structure perpendicularly intersecting the first shaft 230. In the embodiment, the first connecting rod 240 may be disposed on an outer side surface of the first vertical frame 112, to which the connecting bracket 130 is connected, in a direction perpendicular to an extension direction of the first shaft 230.

The first connecting rod 240 is configured to convert the linear motion of a sliding rod 310 of the linear actuator 300 to rotational motion about the first shaft 230 in conjunction with the link part 400 which will be described below. That is, as the sliding rod 310 linearly moves in a front-rear direction of the vehicle, the sliding rod 310 rotates about the first shaft 230 to rotate the first shaft 230. In this case, an upper end portion of the first connecting rod 240 connected to the link part 400 is configured to move in an arc-shaped trajectory in a state in which a lower end portion thereof is connected to the first shaft 230 to fix a position of the first connecting rod 240.

The second flap 200B may be rotatably connected to the second housing 120 though a second shaft 270. The second flap 200B may include a second main panel 250 and a pair of second side panels 260 extending rearward from both sides of the second main panel 250.

The second main panel 250 may include a second lower part 251 disposed to face forward from the second air passage 102 and obliquely extend upward from the second horizontal frame 121 at a lower side and a second upper part 252 extending substantially vertically from the second lower part 251 toward the second horizontal frame 121 at an upper side.

The second shaft 270 may be provided in the pair of second side panels 260, and the second flap 200B may be rotatably connected to the second housing 120 through the second shaft 270.

The second shaft 270 may be provided as a structure passing through the pair of second side panels 260, and both end portions of the second shaft 270 may extend outward from the pair of second side panels 260 and may be connected to the second housing 120.

A second connecting rod 280 connected to the link part 400 may be provided on the second shaft 270. The second connecting rod 280 may extend at an outer side surface of one of the pair of second side panels 260 in a structure perpendicularly intersecting the second shaft 270. In the embodiment, the second connecting rod 280 may be disposed on an outer side surface of the second vertical frame 122, to which the connecting bracket 130 is connected, in a direction perpendicular to an extension direction of the second shaft 270.

The second connecting rod 280 is configured to convert the linear motion of the sliding rod 310 of the linear actuator 300 to rotational motion about the second shaft 270 in conjunction with the link part 400 which will be described below. That is, as the sliding rod 310 linearly moves in the front-rear direction of the vehicle, the sliding rod 310 rotates about the second shaft 270 to rotate the second shaft 270. In this case, an upper end portion of the second connecting rod 280 connected the link part 400 is configured to move in an arc-shaped trajectory in a state in which a lower end portion thereof is connected to the second shaft 270 to fix a position of the second connecting rod 280.

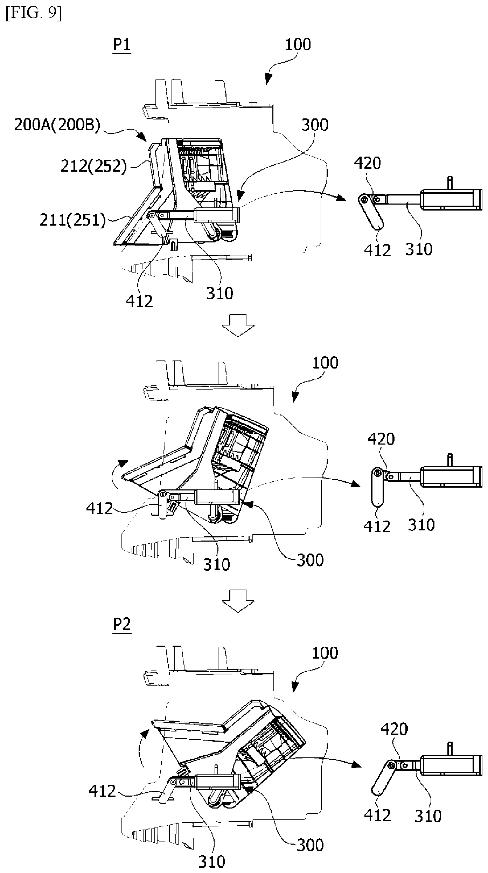

As shown in FIG. 9, the first flap 200A and the second flap 200B may be configured to close the first air passage 101 and the second air passage 102 and allow air to flow to the first upper part 212 and the second upper part 252 along the lower part 211 and the second lower part 251 to reduce resistance.

In addition, the first flap 200A and the second flap 200B may be configured to open the first air passage 101 and the second air passage 102 and allow the first lower part 211 and the second lower part 251 to be disposed substantially parallel to a flow direction of air to minimize the resistance of the air introduced through the first air passage 101 and the second air passage 102. Accordingly, the air may be smoothly introduced into the vehicle through the first air passage 101 and the second air passage 102 in a state in which the influence of the first flap 200A and the second flap 200B is minimized.

The linear actuator 300 may include the sliding rod 310 which linearly moves in the front-rear direction of the vehicle, which is different from the extension direction of the first shaft 230 and the second shaft 270.

The linear actuator 300 generates a driving force for rotating the first flap 200A and the second flap 200B. The driving force generated by the linear actuator 300 is transmitted to the link part 400 connected to the sliding rod 310, is transmitted to each of the first connecting rod 240 and the second connecting rod 280 through the link part 400, and rotates the first shaft 230 and the second shaft 270.

The linear actuator 300 may be fixed to the vertical part 132 of the connecting bracket 130, and the sliding rod 310 may pass through the vertical part 132, extend above the horizontal part 131, and reciprocate forward and rearward. An end portion of the sliding rod 310 may be connected to the link part 400.

The link part 400 may be configured to transmit the driving force of the linear actuator 300 to the flap part 200 to rotate the first flap 200A and the second flap 200B.

The link part 400 may include a driving link 410, a connecting link 420, a first side link 430, and a second side link 440.

The driving link 410 may be rotatably installed in the housing part 100. Specifically, the driving link 410 may be disposed on and supported by a support 133 provided on the horizontal part 131 of the connecting bracket 130, and a cover 134 which covers the driving link 410 may be coupled onto the support 133. The cover 134 may restrict the rotating driving link 410 such that the driving link 410 does not come off the support 133.

The driving link 410 may be disposed between the first housing 110 and the second housing 120 in a direction perpendicular to the sliding rod 310. A pair of side rods 411 may be provided on one end and the other end of the driving link 410 in a longitudinal direction, and a center rod 412 may be provided between the pair of side rods 411.

The pair of side rods 411 and the center rod 412 may be provided in a structure extending in a direction different from the longitudinal direction of the driving link 410. In the embodiment, the pair of side rods 411 may extend in parallel in a direction perpendicular to the longitudinal direction of the driving link 410, and the center rod 412 may extend parallel to the pair of side rods 411.

One end of the connecting link 420 may be rotatably connected to the center rod 412, and the other end thereof may be rotatably connected to the sliding rod 310. That is, the driving link 410 and the linear actuator 300 are connected through the connecting link 420. Accordingly, the driving force of the linear actuator 300 may be transmitted to the driving link 410 through the connecting link 420 and rotate the driving link 410.

An end portion of the center rod 412 connected to the connecting link 420 is configured to move in an arc-shaped trajectory between a first point P1, which is at a front side based on a vertical line L passing through the driving link 410, and a second point P2 which is at a rear side based thereon when the sliding rod 310 moves forward and rearward. In this case, the connecting link 420 may ensure that the center rod 412 moves in the arc-shaped trajectory.

Specifically, at the first point P1 and the second point P2, an upper end portion of the center rod 412 is positioned at the same level as the first point P1 and the second point P2, and at the vertical line L in the middle of the first point P1 and the second point P2, the upper end portion thereof is positioned at a higher level than the first point P1 and the second point P2. A height difference G generated while the center rod 412 rotates may be absorbed by changing between a horizontal state and a tilted state while the connecting link 420 rotates.

The first side link 430 and the second side link 440 may connect the first flap 200A and the second flap 200B to the driving link 410, respectively. One end of the first side link 430 may be rotatably connected to the side rod 411 at one side, and the other end thereof may be rotatably connected to the first connecting rod 240. In addition, one end of the second side link 440 may be rotatably connected to the side rod 411 at the other side, and the other end thereof may be rotatably connected to the second connecting rod 280.

The first flap 200A and the second flap 200B are disposed to close the first air passage 101 and the second air passage 102 in a state in which the center rod 412 is positioned at the first point P1 and to open the first air passage 101 and the second air passage 102 in a state in which the center rod 412 is positioned at the second point P2.

The first side link 430 may include a first connecting hole 431 coupled to a connecting protrusion 241 of the first connecting rod 240. As a wedge-shaped support protrusion 4310 having a chamfered surface 4310a may be provided in the first connecting hole 431, the first connecting hole 431 may have a structure whose diameter decreases from both side surfaces of the first side link 430 toward an inner center thereof.

The second side link 440 may include a second connecting hole 441 coupled to a connecting protrusion 281 of the second connecting rod 280. As a wedge-shaped support protrusion 4410 having a chamfered surface 4410a is provided in the second connecting hole 441, the second connecting hole 441 may have a structure whose diameter decreases from both side surfaces of the second side link 440 toward an inner center thereof.

Since a front surface of the vehicle is designed to have a curved line, an operation angle of each of the first flap 200A and the second flap 200B may not be perpendicular to an operation angle of the sliding rod 310. For example, the first shaft 230 and the second shaft 270 are disposed in structures bent at about 3° toward a side and rear of the vehicle, respectively. Accordingly, an angle a between the extension direction of the first shaft 230 and the second shaft 270 and an operation angle of the sliding rod 310 is 93° instead of 90°.

The first connecting hole 431 and the second connecting hole 441 may include the wedge-shaped support protrusions 4310 and 4410 having the chamfered surfaces 4310a and 4410a therein, and the connecting protrusions 241 and 281 of the first connecting rod 240 and the second connecting rod 280 may be formed in linear contact with the first connecting hole 431 and the second connecting hole 441, respectively, when the connecting protrusions 241 and 281 are coupled to the first connecting hole 431 and the second connecting hole 441, to absorb the operation angle difference of 3°. Accordingly, even when the first shaft 230 and the second shaft 270 do not form right angles with the first side link 430 and the second side link 440, respectively, the first shaft 230 and the second shaft 270 may smoothly operate and open and close the first air passage 101 and the second air passage 102.

As described above, according to the embodiment of the present invention, the linear actuator 300, which is relatively cheaper than the conventional high-torque actuator, may be used as an actuator used for rotational driving of the flap part 200 to reduce expenses.

In particular, since the conventional high-torque actuator should be directly connected to a rotary shaft of a flap to transmit a rotational force, a high-torque actuator having a high torque (for example, a torque of the high-torque actuator itself is 60 kgf·cm or more) is required, which is a greatest reason for the increase in cost. However, in the present embodiment, the linear actuator 300, which is relatively cheap and has a relatively small force (for example, 50 kgf), may be used, and a torque (250 kgf·cm) required for driving the flap part 200 may be obtained by adjusting a length (for example, 5 cm) of each of the first connecting rod and the second connecting rod. In this case, there is an advantage of obtaining a torque higher than that of the conventional high-torque actuator in addition to the cost reduction effect.

According to an embodiment of the present invention, an active air flap apparatus for a vehicle in which a linear actuator, which is relatively cheaper than a high-torque actuator, is used so as to reduce the cost of the active air flap apparatus and also generate an increased torque compared to the conventional case can be provided.

Effects of the present invention are not limited to the above-described effects and other undescribed effects will be clearly understood by those skilled in the art from the appended claims.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An active air flap apparatus for a vehicle, comprising:
a housing part including a first housing having a first air passage and a second housing having a second air passage;
a flap part including a first flap which is rotatably connected to the first housing through a first shaft and selectively opens and closes the first air passage and a second flap which is rotatably connected to the second housing through a second shaft and selectively opens and closes the second air passage;
a linear actuator including a sliding rod which linearly moves in a front-rear direction of the vehicle which is different from an extension direction of the first shaft and the second shaft and generates a driving force for rotating the first flap and the second flap; and
a link part configured to transmit the driving force to the flap part to rotate the first flap and the second flap.

2. The active air flap apparatus of claim 1, wherein
the first shaft includes a first connecting rod connected to the link part and the second shaft includes a second connecting rod connected to the link part, respectively, wherein
the first connecting rod and the second connecting rod are disposed in directions perpendicular to the extension direction of the first shaft and the second shaft, respectively.

3. The active air flap apparatus of claim 2, wherein the first connecting rod and the second connecting rod are configured to convert linear motion of the sliding rod to rotational motion about the first shaft and the second shaft in conjunction with the link part.

4. The active air flap apparatus of any one of claims 1 to 3, wherein the link part includes:
a driving link rotatably installed in the housing part, the driving link includes a pair of side rods disposed on a first end and a second end thereof in a longitudinal direction and a center rod disposed between the pair of side rods;
a connecting link having a first end rotatably connected to the center rod and a second end connected to the sliding rod;
a first side link having a first end rotatably connected to the side rod at a first side and a second end rotatably connected to the first connecting rod; and
a second side link having a first end rotatably connected to the side rod at a second side and a second end rotatably connected to the second connecting rod.

5. The active air flap apparatus of claim 4, wherein
the driving link is disposed between the first shaft and the second shaft in a direction perpendicular to the sliding rod, and
the pair of side rods and the center rod are disposed in a structure extending in a direction different from the longitudinal direction of the driving link.

6. The active air flap apparatus of claim 4 or 5, wherein
the first side link includes a first connecting hole coupled to a connecting protrusion of the first connecting rod,
a wedge-shaped support protrusion having a chamfered surface is disposed in the first connecting hole, and
the first connecting hole has a diameter that decreases from both side surfaces of the first side link toward a center of the first side link.

7. The active air flap apparatus of any one of claims 4 to 6, wherein
the second side link includes a second connecting hole coupled to a connecting protrusion of the second connecting rod,
a wedge-shaped support protrusion having a chamfered surface is disposed in the second connecting hole, and
the second connecting hole has a diameter that decreases from both side surfaces of the second side link toward a center of the second side link.

8. The active air flap apparatus of any one of claims 4 to 7, wherein an end portion of the center rod connected to the connecting link is configured to move in an arc-shaped trajectory between a first point, which is at a front side based on a vertical line passing through the driving link, and a second point which is at a rear side based thereon.

9. The active air flap apparatus of any one of claims 4 to 8, wherein
the driving link is disposed on and supported by a support provided in the housing part, and
a cover which covers the driving link is coupled onto the support.

10. The active air flap apparatus of any one of claims 1 to 9, wherein
the housing part includes a connecting bracket disposed between and connected to the first housing and the second housing, and
the linear actuator and the link part are installed on the connecting bracket.
